# EUROPEAN PATENT SPECIFICATION

(11) **EP 2 663 478 B1**
(45) Date of publication and mention of the grant of the patent: **13.09.2017**
(21) Application number: 12701942.0
(22) Date of filing: 05.01.2012
(51) Int. Cl.: B60T 15/38, B60T 11/224

(54) **MASTER CYLINDER**
HAUPTZYLINDER
MAÎTRE-CYLINDRE

(30) Priority: 12.01.2011 IT TO20110007
(43) Date of publication of application: 20.11.2013
(60) Divisional application: 15152705.8
(73) Proprietor: VHIT S.p.A., 26010 Offanengo (IT)
(72) Inventor: CADEDDU, Leonardo, 26010 Offanengo (CR) (IT); ALBERTI, Luigi, 26010 Offanengo (CR) (IT)
(74) Representative: Robba, Pierpaolo
(86) International application number: PCT/IB2012/050060
(87) International publication number: WO 2012/095766

(56) References cited:
- WO-A1-99/47401
- WO-A1-2006/103049
- WO-A2-2009/077190
- IT-B- 1 064 013
- US-A- 2 463 062
- US-A- 3 667 226

## Description

### Technical field

The present invention relates to hydraulic pressure generating devices of the kind commonly known as master cylinders, and more particularly it relates to a differential master cylinder.

Preferably, but not exclusively, the invention is applied in hydraulic braking systems of motor vehicles, and the following description will generally refer to such a preferred application.

### Prior Art

Differential master cylinders are pressure generating devices comprising a piston with two portions with different diameters, or a pair of pistons with different diameters, and a hydraulic valve arranged to act so that:
- the piston portion or the piston with larger diameter is initially operating, in order to supply, for a given stroke of the piston, a large amount of fluid at low pressure;
- subsequently, upon the attainment of a given pressure threshold (cutting pressure or cutting point), the piston portion or the piston with smaller diameter gradually starts operating, in order to supply, for a given stroke of the piston, a limited amount of fluid at high pressure.

This behaviour is very useful in hydraulic control of the brakes of motor vehicles. Actually, in the brakes, a play between the stationary parts and the moving parts (for instance, the pads and the discs of a disc brake) is necessary in order to avoid contact while the vehicle is moving, resulting in absorbed passive powers, overheating and wear. In order to take up such a play at the beginning of the braking, a quite high volume of low pressure fluid is necessary. Subsequently, when the stationary and the moving parts of the brake are defmitively in contact, the volume of absorbed fluid decreases, but a pressure is required that is the higher the stronger is the braking.

A first peculiar feature of differential master cylinders is the gradual pressure reduction in the differential chamber, from the cutting pressure down to atmospheric pressure, in order to gradually change, in pleasant way, the force-to-pressure ratio. A second peculiar feature is that, at the end of the differential transition, the whole of the force applied acts on the smaller piston area. In practice, a differential master cylinder acts as it would consist of a pair of master cylinders with different diameters operating sequentially, without losses of mechanical/hydraulic performance.

Differential master cylinders allow limiting the overall stroke necessary for operating the brakes and allow keeping the force applied to the brake pedal within acceptable limits, and they are often used in situations where a brake booster cannot be used for limiting the effort at the pedals.

US 3,667,229 discloses an example of differential master cylinder with a piston comprising two parts with different diameters defining, with corresponding sections of the cylinder bore, a high-pressure chamber and a low-pressure chamber, which are in communication during the initial phase mentioned above and are isolated from each other after the attainment of the cutting pressure. The control valve is coaxially arranged between the two parts of the piston.

This known solution has some drawbacks:
- machining and assembling difficulties, due to the configuration of the two-diameter cylinder bore and to the configuration of the piston, and consequent high manufacturing cost if compared to the market value;
- difficulty of mounting the cylinder on the vehicle, due to the greater axial size with respect to a conventional master cylinder: this latter aspect is of particular importance above all for agricultural tractors, earth moving machines and the like, where the room available for the braking control devices in the engine compartment is more and more limited.

US 6,378,958 discloses a distributing valve for a servo-assisted braking system, in order to distribute fluid coming from different hydrodynamic sources and supply the brakes of a vehicle with low pressure fluid in a first phase of the braking and with high pressure fluid in a second phase of the braking. The valve has a pair of telescopically mounted sliding pistons, and includes a hydrostatic control driven by a simple master cylinder o a double-circuit master cylinder. This valve creates size problems, since it is necessary to provide supplemental room for the valve, which is external to the master cylinder, and the relevant connections to the cylinder and to the hydrodynamic sources of the servo-assistance fluid. Moreover, it makes the brake control system complex and expensive.

US 2,463,062 A discloses an example of compound master cylinder with one stationary high pressure piston and one low pressure piston slidable inside the stationary piston.

### Description of the invention

It is an object of the invention to provide a differential master cylinder solving the problems of the prior art.

According to the invention, the compression members for the fluid comprise a hollow primary piston and a hollow secondary piston, which are open at one end and are mutually associated in telescopic manner so that the primary piston slides on the secondary piston, which is stationary, and so that said pistons define, with the internal surface of a cylinder bore, at least one external chamber forming the at least one chamber connected to the user device.

Advantageously, the pistons are associated so that their cavities form an internal chamber which is arranged to cooperate with the external chamber during the initial phase and is subsequently isolated therefrom in order to gradually return to atmospheric pressure.

Further advantageously, the control valve is located externally of the pistons and is housed in a seat whose axis is parallel to the piston axis.

Thanks to such features, the cylinder has a limited axial size and it does not need a bore with different diameters.

The invention also concerns a method of driving a user device with pressurised fluid by means of the cylinder and a balancing device for a set of master cylinders.

### Brief description of the drawings

Other advantages and features of the invention will become apparent from the following description of preferred embodiments, with reference to the accompanying drawings, in which:
- Fig. 1 is an axial cross-section of a first embodiment of the invention;
- Fig. 2 is an enlarged view of the control valve;
- Fig. 3 is an axial cross-section of a second embodiment of the invention, suitable for use in a vehicle with two braking pedals and equipped with a first kind of system for balancing braking of the wheels on opposite vehicle sides;
- Fig. 4 is an axial cross-section of a variant of the second embodiment of the invention, equipped with a second kind of system for balancing braking of the wheels on opposite vehicle sides;
- Fig. 5 is an axial cross-section showing the balancing system shown in Fig. 4 applied in a kind of master cylinder according to the prior art;
- Fig. 6 is an axial cross-section of another variant of the second embodiment of the invention, equipped with a third kind of system for balancing braking; and
- Fig. 7 shows a variant embodiment of the control valve.

### Detailed description of preferred embodiments

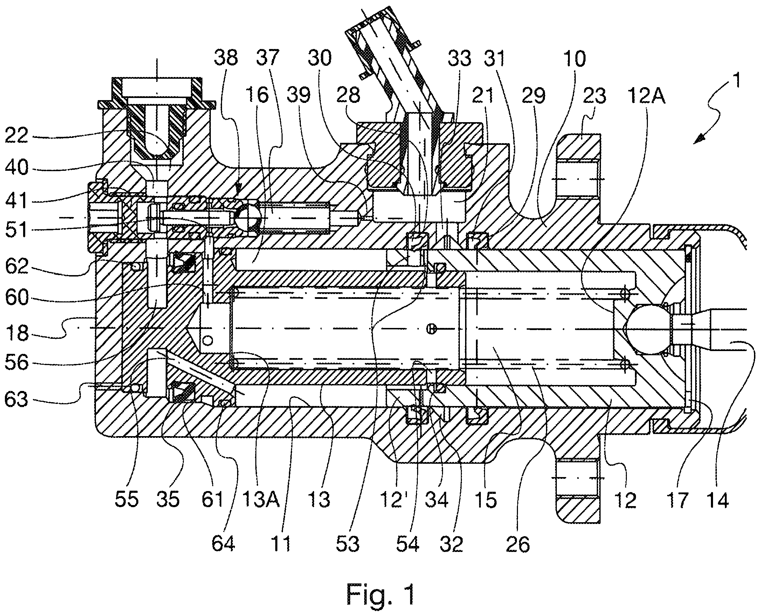

Referring to Fig. 1, a master cylinder 1 according to the invention includes a substantially cylindrical body 10, which is hollow and open at one end, is made for instance of cast iron, light alloy or a thermoplastic or thermosetting polymer, and has a longitudinal bore 11 where a pair of hollow pistons 12 and 13 are housed. Piston 12 (primary piston) is controlled by the brake pedal through an actuating rod 14 and is telescopically slidable on piston 13 (secondary piston), which is stationary. By convention, hereinafter the portion of the cylinder or its components located on the same side as rod 14 will be referred to as "front portion", and the opposite portion will be referred to as "rear portion".

Pistons 12, 13 are closed at one end and are open at the opposite end, and they are mounted so that their internal cavities form a single cylindrical chamber 15, inside which there is mounted an element 26 opposing the sliding of piston 12, in particular a coil spring arranged between an internal projection 12A of the closed end of piston 12 and an internal shoulder 13A of piston 13. The latter piston in turn defines an annular chamber 16 with the front surface of the open end of primary piston 12 and the side wall of bore 11. As it will be explained later on, chamber 16 is the chamber where the brake control pressure is generated, whereas the gradual pressure reduction mentioned above takes place within chamber 15.

Advantageously, the external diameter of piston 12 is slightly greater at the piston ends than in the axially intermediate section, and the sections with greater diameter (of which the rear one, formed in correspondence of the open end, is denoted 12') act as guides for the sliding of piston 12, whereas a gap (that cannot appreciated in the Figure) will exist between said intermediate section of piston 12 and the wall of bore 11.

The telescopic arrangement mentioned above allows using a low rigidity, relatively long spring, determining a reduced load variation, for bringing back the system to the starting conditions when the force applied to rod 14 ceases.

The closed end of piston 12 abuts against a stop ring 17, e.g. a Seeger ring, located in a suitable groove formed in the wall of bore 11 at the mouth thereof. Rod 14 is connected in conventional manner to such closed end of piston 12. On the opposite side with respect to piston 12, piston 13 abuts against the end of bore 11 and is kept in abutment against said end 18 by spring 26.

Still in conventional manner, body 10 has formed therein an inlet 21 for the fluid, typically oil, coming from a reservoir, at least one outlet 22 for supplying user devices, in the preferred application hydraulic driving members of the brakes, with the fluid under pressure, and a flange 23 for fastening the body to the pedal support. The reservoir, the user devices, the ducts for their connection to the cylinders and the support are not shown for the sake of simplicity.

A pair of lip gaskets 28, 29, housed in respective grooves 30, 31, advantageously with rectangular cross section, is arranged in the wall of bore 11, in an axially intermediate section facing the intermediate section of piston 12. A third groove 32, e.g. trapezoidal, which communicates with inlet 21 through a radial passage 33 and serves for collecting the fluid coming from the reservoir, is formed between grooves 30, 31. Gasket 28 is intended to shut, when piston 12 is operated, passages 53 formed in piston 12 near the open end and putting groove 32 in communication with chamber 16. Gasket 29 ensures fluid seal between piston 12 and the wall of bore 11 towards the atmosphere. Gaskets 28, 29 are static with respect to their seats (hence with respect to the internal surface of bore 11), and dynamic with respect to the external surface of piston 12. This allows a reduced wear of the gaskets, since they act by means of a surface that is not subjected to wear due to the piston sliding.

An annular gasket 34, located in a seat formed in the internal surface of primary piston 12 in a position rearward of passages 53, is intended to shut, when piston 12 is operated, a passage 54 formed in the wall of piston 13 near the open end thereof and putting chambers 16 and 15 in communication with each other.

The end portion of chamber 15, beyond shoulder 13A, has an outlet 60 allowing sending the fluid to a valve 38controlling the differential transition, which valve is described below.

The end portion of piston 13 is widened in order to delimit chamber 16 rearwards, and it has one or more ducts 55 putting chamber 16 in communication with a circular groove 56 formed between the end portions of piston 13 and bore 11 and communicating with outlet 22 through a radial passage 40. Chamber 15 too can communicate with groove 56 through outlet 60 and a passage 61 formed by the radial clearance between the end portions of piston 13 and bore 11. A further lip gasket 35 is provided along such a passage 61 and forms a unidirectional valve arranged to allow communication between chamber 15 and groove 56 (and hence the cooperation between chambers 15 and 16) only during an initial phase of the braking, as it will be explained below.

An annular gasket 62, for instance a lip gasket, externally surrounding the closed end of piston 13 prevents fluid from flowing from groove 56 into the space between the end wall of piston 13 and end 18 of the cavity. A vent hole 63 is further provided in end 18 in order to maintain such a space at atmospheric pressure and discharge to the outside fluid, if any, present in such a space because of leakages, thereby preventing piston 13 from being pushed towards piston 12.

A further gasket 64 prevents possible leakages of fluid from chamber 16 to chamber 15 through passage 60.

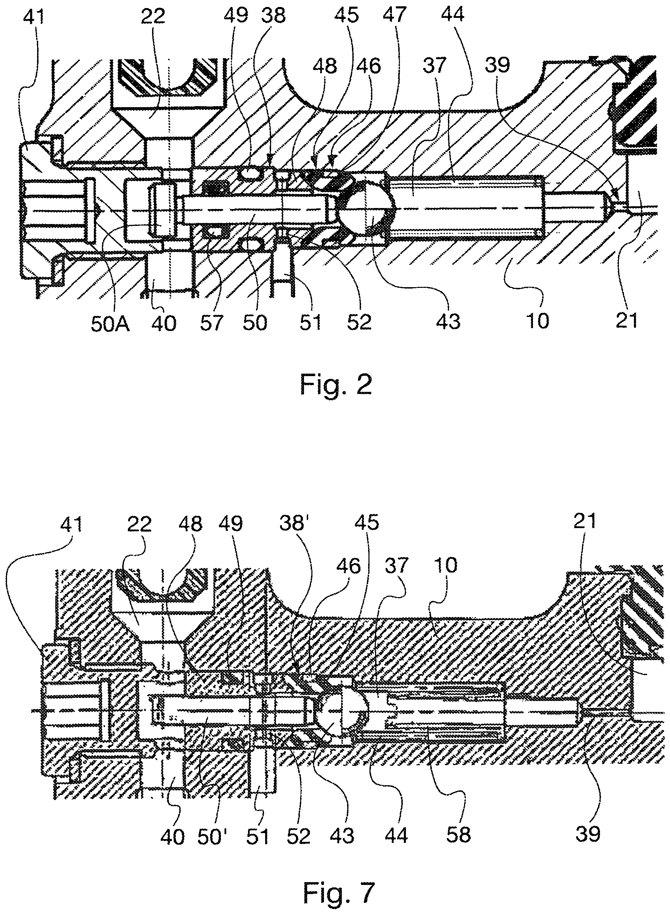

A multiple-diameter cavity 37, having axis parallel with the axis of bore 11 and housing valve 38 controlling the differential transition, is also formed in the rear portion of body 10, between bore 11 and outlet 22. Cavity 37 is closed at one end by a plug 41 equipped with a gasket, and it communicates at the other end with inlet 21 through a hole 39. As it can be better seen in Fig. 2, valve 38, normally closed, comprises a ball shutter 43, which is opposed by a spring 44 the preload of which determines the opening pressure for the valve. In rest conditions, shutter 43 abuts against an elastic wedge 45, preferably made of rubber, providing fluid tightness between the portions of cavity 37 upstream and downstream the shutter. A ring 46, abutting against a step 47, prevents wedge 45 from sliding when shutter 43 is displaced upon the opening of the valve. On the opposite side with respect to shutter 43, wedge 45 abuts against a bushing 48 of which the axial position is set by plug 41. The initial opening of the valve is determined by the pressure in chamber 15, which pressure is applied to shutter 43 through outlet 60, holes 51, 52 formed in the wall of bore 11 and in bushing 48, respectively, and the radial clearance between bushing 48 and a stem 50, axially slidable in the bushing and arranged to displace shutter 43 after the initial opening. Stem 50 has a widened head 50A and is responsive to the pressure of the fluid in chamber 16. To this end, cavity 37, in the region where head 50A is located, crosses passage 40, for instance thanks to radial holes in plug 41. A gasket 57 provides fluid tightness between stem 50 and bushing 48, and a gasket 49 provides fluid tightness between the bushing and the wall of cavity 37.

Valve 38 is known per se from US 3,667,229, where however is arranged in series between the pistons. The arrangement parallel to bore 11 is one of the features of the invention contributing to limiting the axial size. Moreover valve 38, being accessible from the outside, allows obtaining products with different calibrations from a same differential master cylinder structure.

The operation of the invention will be now described.

In rest conditions, shown in Fig. 1, there is a hydraulic connection between inlet 21 and outlet 22 (hence between the fluid reservoir and the brake driving members) through passage 33, groove 32, the gap between the internal wall of bore 11 and piston 12, passages 53, 54, chamber 16, passage 55, groove 56 and passage 40. Such a connection serves to compensate possible volume variations due to temperature variations and to leakages.

When a force sufficient to overcome the preload of spring 26 is applied to rod 14 by acting on the brake pedal, piston 12 moves leftwards, thereby closing radial passages 53 by means of gasket 28 and blocking communication with the reservoir. Immediately thereafter, gasket 34 closes passage 54, thereby blocking communication between chambers 16 and 15. In such conditions, hydraulic fluid is present in both chambers. Chamber 15 is closed towards both the reservoir and the brake driving members (by gaskets 34 and 35, respectively) and chamber 16 communicates with outlet 22 through passage 55. A further increase in the applied force, and hence in the displacement of piston 12, will cause fluid displacement towards outlet 22 through passage 55, groove 56 and passage 40.

The conventional hydraulic fluids can be considered as incompressible, and hence a reduction, even small, in the volume of the chambers where they are contained causes a significant pressure increase, proportional to the absorption by the user devices (i.e. the brake driving members). In this phase, chamber 15is not in communication with said devices and hence no absorption occurs, so that the volume reduction caused by the displacement of piston 12 will cause a rapid increase of the pressure in that chamber with respect to chamber 16, which on the contrary is directly connected to the brake driving members. The pressure increase in chamber 15 will then overcome the resistance of gasket 35, thereby allowing the fluid to flow towards outlet 40, where the fluid volumes contained in both chambers are added together. In this phase, the diameter of primary piston 12 can therefore be considered as the effective cylinder diameter. Until this moment, valve 38 is not affected by the fluid flow towards the outlet.

At this point, by continuing to act upon the brake pedal and hence on rod 14, the pressure in chamber 15 increases with the same law as in chamber 16 and, when the resistance opposed by spring 44 is overcome (cutting point), it makes valve 38 open. The opening of valve 38 makes the pressure in chamber 15 to be discharged towards inlet 21, and hence towards the reservoir, through hole 39. From this moment on, chambers 15 and 16 are again separated. Discharging the pressure in chamber 15 through valve 38 makes the pressure in chamber 16 prevail on that in chamber 15. The pressure in chamber 16 applies a force, increasing proportionally to such a pressure, on stem 50, which displaces shutter 43, thereby moving it further away from wedge 45 against the load of spring 44 and causing a gradual decrease of the pressure in chamber 15. When head 50A of stem 50 reaches bushing 48, valve 38 is completely open and chamber 15 is at atmospheric pressure. During such a transient, also the ratio between the force applied onto rod 14 and the output pressure of the cylinder is modified proportionally to the decrease of the pressure in chamber 15, and the output pressure gradually attains the value determined by the application of the force onto the only annular front surface of piston 12, without losses of performance apart from those due to frictions and to the opposing spring, which losses, on the other hand, are equivalent to those occurring in conventional master cylinders.

After such a transient, the final phase begins.

In synthesis, according to the invention, the sliding of primary piston 12 on stationary secondary piston 13 implements the different steps of the cylinder actuation (and hence of the brake operation) and leads to the variation of the stroke-to-volume ratio with respect to the force-to-pressure ratio.

It is also to be appreciated that, in case of a rapid actuation of the brake pedal, the cutting point is advantageously raised thanks to the throttle caused by calibrated hole 39 that, by slowing down the fluid flow towards the reservoir, causes an increase in the pressure downstream shutter 42, and such an increase in turn raises the pressure necessary for the opening and hence the cutting point. This behaviour compensates the need to have a greater approaching pressure for the moving parts of the brake driving members, due to the inertia, because of the increased actuation speed.

The described arrangement assumes that all brakes are operated by a single master cylinder. As known, in certain vehicles such as agricultural tractors, earth moving machines and the like, the brakes on opposite vehicle sides (in particular, the rear brakes) can be operated separately or jointly by two separate brake pedals through respective master cylinders. As known, in such cases, a balancing system is required in order to ensure a braking substantially of the same intensity on both sides when both pedals are simultaneously operated. The balancing is obtained by transferring fluid under pressure between the two master cylinders through a balancing duct and a pair of balancing valves, one for each cylinder, which are normally closed and open when the stroke of the respective piston exceeds a given value.

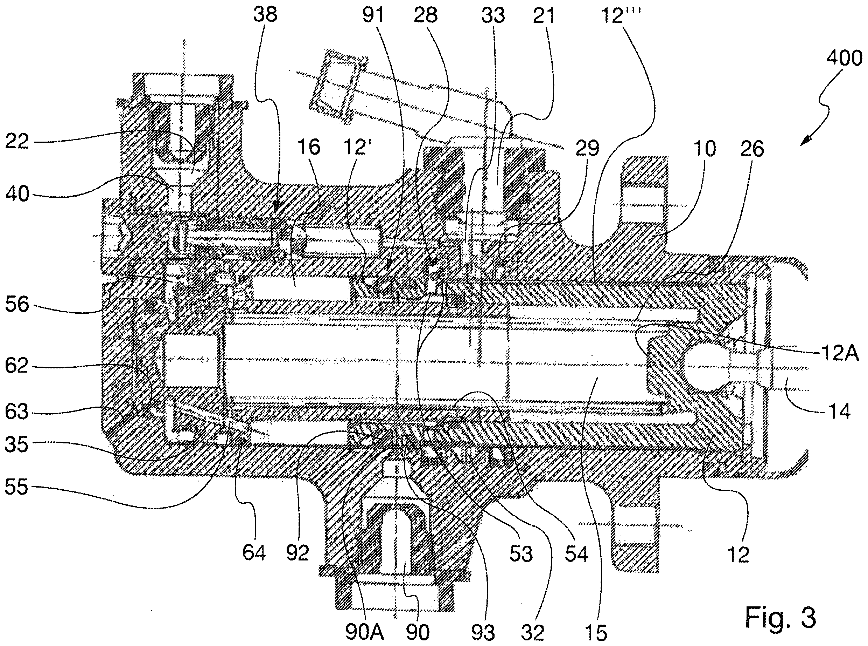

Two examples of balancing systems where the valves are controlled by the piston stroke are disclosed in patent documents IT 1064013 and WO 2009/077190. Both such systems can be applied without difficulties in the invention, as shown for master cylinder 400 in Fig. 3.

In that Figure, elements already disclosed with reference to Fig. 1 are still denoted by the same reference numerals. Reference numeral 90 denotes the connection for the balancing duct (not shown), which connection is formed in a position substantially diametrically opposite inlet 21 and has a hole 90A for communication with bore 11. Reference numeral 91 denotes the balancing valve, which is of the kind disclosed in WO 2009/077190. The shutter of valve 91 consists of section 12' of primary piston 12, in the external surface of which there are mounted two toroidal gaskets 92, 93, axially spaced apart from each other. The position of connection 90 is such that, in the rest position shown in the Figure, gaskets 92, 93 are positioned at both sides of hole 90A, thereby preventing communication between the balancing duct and high-pressure chamber 16. Upon the actuation of the brake pedal, gaskets 92, 93 allow hole 90A to put the balancing duct in communication with chamber 16 through the clearance between bore 11 and intermediate portion 12"', with reduced diameter, of piston 12, and passages 53. For further details, WO 2009/077190 is referred to.

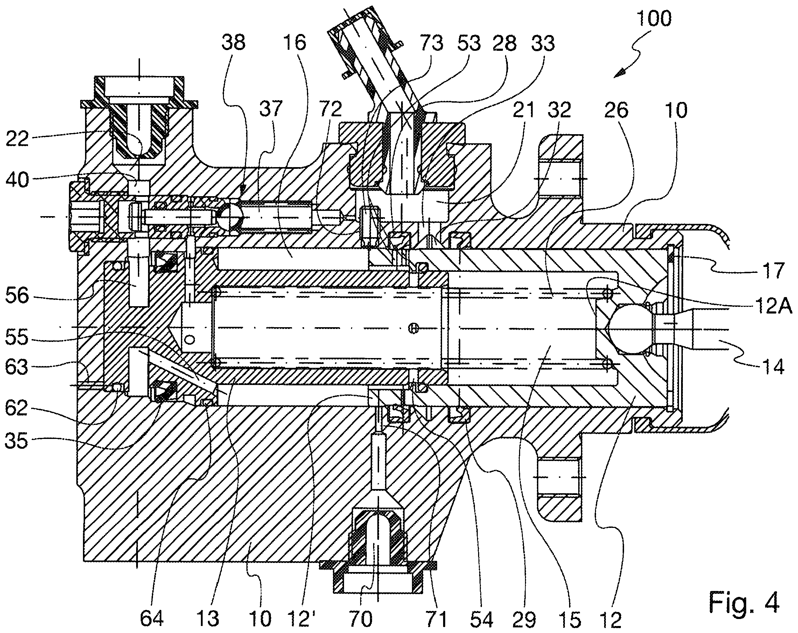

Fig. 4 discloses a master cylinder 100 based on the same principles as cylinder 1 shown in Fig. 1 and equipped with a different kind of stroke-driven balancing system. Elements already disclosed with reference to Fig. 1 are still denoted by the same reference numerals.

Reference numeral 70 denotes the connection for the balancing duct (not shown), which connection has a hole 71 for communication with bore 11 and is formed in a position substantially diametrically opposite inlet 21. The position of connection 70 is such that hole 71 is closed by guiding section 12' of piston 12 in rest conditions, shown in the Figure, thanks to the direct seal, for instance of the metal-to-metal type, between piston 12 and body 10. Upon actuation of the brake pedal, hole 71 will put the balancing duct in communication with pressure chamber 16 through the clearance between bore 11 and the intermediate portion, with reduced diameter, of piston 12, and passages 53.

Due to the manufacturing tolerances, the radial clearance between section 12' of piston 12 and the walls of bore 11 can vary in such a way that it does not allow a satisfactory hydraulic seal when the balancing system is not to operate. In order to take up such a clearance, a slight deformation of the wall of bore 11 is provided in correspondence of section 12' of piston 12. In order to obtain such a local deformation, a threaded hole 72, blind towards bore 11 and having axis aligned with the axis of hole 71, is formed in inlet 21, said hole being engaged by a threaded member 73, e.g. a threaded dowel. In the assembling line of the cylinder, first a torque such as to cause a local deformation sufficient to lock piston 12 will be applied to screw 73. Then, the torque will be reduced until piston 72 becomes freely slidable. In this manner, section 12' of the piston is pushed towards hole 71 and the clearance with bore 11 is almost zero.

In the alternative, a torque sufficient to deform the bore wall in the elastic range will be applied to screw 73, after having displaced piston 12 so as to bring the intermediate portion, with reduced diameter, of the piston in correspondence of hole 71. When the piston is then released, it will move back under the thrust of spring 26 and will stop at the deformation. A subsequent reduction of the torque will cause the beginning of the sliding toward the rest position, in a condition in which the clearance is almost zero.

Taking into account the usual machining tolerances, the extent of the deformation may range from some hundredths of a millimetre (in particular 2 - 3) to one tenth of a millimetre.

In this embodiment, the balancing valve is thus formed by the primary piston and the bore. With respect to the use of the valves disclosed in IT 1064013 and WO 2009/077190 (see Fig. 3), this solution allows eliminating the gaskets, whereby the sliding friction and the number of components are reduced. Moreover, even when the balancing circuit is operating, this solution does not require a greater force on the pedal in order to make the primary piston move, thereby improving use comfort and performance. Furthermore, with respect to other valves known in the art, it allows keeping the axial size of the cylinder limited.

A valve of this kind can be applied also in non-differential master cylinders, either simple cylinders like the ones disclosed in IT 1064013 and WO 2009/077190, or tandem cylinders like the one disclosed in WO 2006/103049.

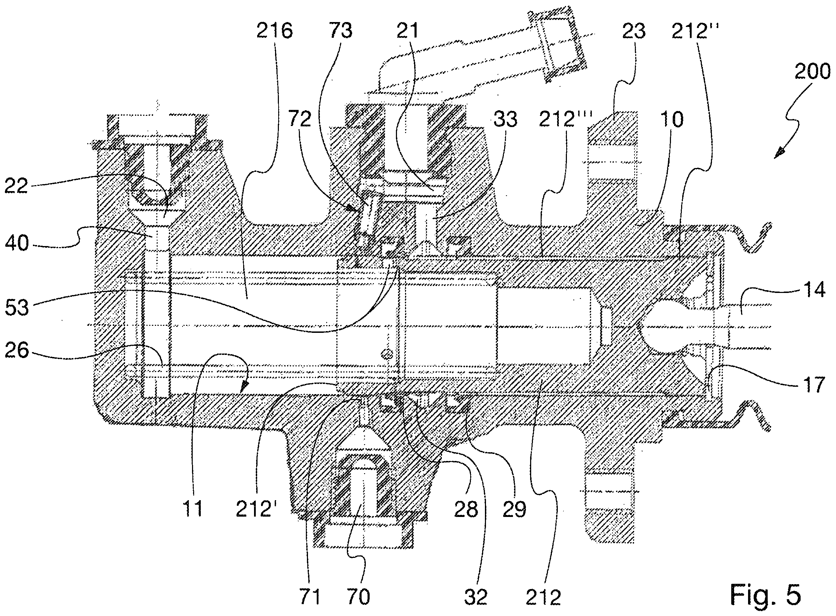

Fig. 5 shows the application to a master cylinder 200 of the simple type, in which a substantially barrel-shaped piston 12 defines a pressure chamber 216 with bore 11. Elements already disclosed with reference to Figs. 1 and 4 are still denoted by the same reference numerals. Moreover, in this Figure, both guiding end portions 212' (intended to cooperate with the local deformation) and 212", as well as gap 212'" between the intermediate section of the piston and the wall of the bore, can be recognised. Of course, in a tandem cylinder, hole 72 and threaded member 73 will be provided for each piston.

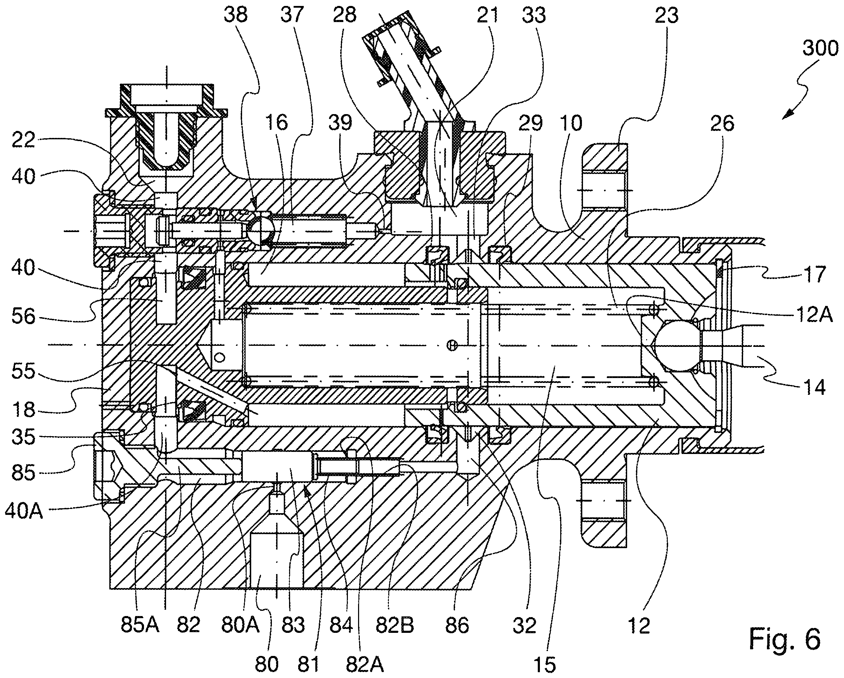

The balancing valve could open in response to the pressure existing in chamber 16 instead of opening in response to the stroke of the primary piston. Fig. 6 discloses a master cylinder 300 based on the same principles as cylinder 1 shown in Fig. 1 and equipped with a balancing system of this kind. Elements already disclosed with reference to Fig. 1 are still denoted by the same reference numerals. Reference numeral 80 denotes the connection for the balancing duct (not shown), formed in the lower part of body 10, and reference numeral 81 denotes the balancing valve for putting chamber 16 in communication with connection 80.

Valve 81 is mounted in a multiple-diameter axial chamber 82, formed in body 10 below bore 11, in a position substantially symmetrical with respect to seat 37 of valve 38, and having axis parallel to the axes of bore 11 and seat 37. This contributes to limiting the longitudinal size of the master cylinder. Chamber 82 communicates with chamber 16 through passages 55 and a radial passage 40A, symmetrical with respect to passage 40. Valve 81 has a shutter 83 which is axially slidable in chamber 82 in opposite direction with respect to primary piston 12 and which can be operated for opening in a manner fluidically controlled by the pressure in chamber 16. Shutter 83 is therefore mechanically unconstrained to piston 12. This allows reducing the number of components. In rest conditions, the shutter is positioned so as to close access 80A to connection 80. The displacement of shutter 83 takes place against the action of a resilient return member 84, e.g. a spring, the preload of which determines a pressure threshold for the opening. Advantageously, such a threshold is as low as possible, so that the balancing function can be actuated already in the initial phases of the braking.

Chamber 82 is closed towards the outside of body 10 by a plug 85, an axial appendage 85A of which extends through the front portion of chamber 82 and acts a stop member for the stroke of shutter 83 in the rest position. On the opposite side with respect to plug 85, the stop for the stroke of shutter 83 is obtained thanks to a shoulder 82A created by a first narrowing of chamber 82. A further narrowing creates an abutment 82B for the end of spring 84 on the opposite side with respect to shutter 83. The end portion of chamber 82 communicates with trapezoidal groove 32, and hence with the supply reservoir, through a radial passage 86. The twofold communication capability for chamber 82 (with chamber 16 of the master cylinder and the supply reservoir) prevents oil possibly accumulated from remaining in a blind space in chamber 82, thereby hindering the proper displacement of shutter 83.

The seal between shutter 83 and connection 80 may be obtained by means of a suitable gasket but, in the preferred embodiment shown in the drawing, it is a direct seal (for instance of the metal-to-metal type). Such a feature further facilitates the slight leakage of fluid from balancing duct 80 occurring in any condition between chamber 82 and shutter 83. Should the fluid stagnating in the balancing duct undergo a considerable volume increase (for instance because of a temperature increase) when both balancing valves 81 are closed, such a leakage allows preventing a pressure increase.

If a sealing gasket is used, advantageously it can be displaced jointly with the shutter in such a way that it remains operatively positioned in a region of chamber 82 located beyond opening 80A of connection 80, in particular between such opening and the first shoulder 82A. In this manner, the gasket cannot scrape against the edges of the opening, and hence it does not risk tearing.

The presence of the pressure-driven or stroke-driven balancing does not modify the general operation of the invention. It is to be appreciated that balancing valve 81 can be accessed from the outside like valve 38 and hence it too allows obtaining products with different calibrations from a same cylinder structure.

It is clear that the above description has been given only by way of non-limiting example and that changes and modifications are possible without departing from the scope of the invention as defined in the following claims.

For instance, as shown in Fig. 7, stem 50' in valve 38' may have constant diameter. In this case, a stop member 58 for the stroke of shutter 43 will be provided in chamber 37. Moreover, in valves 38 (Fig. 1) and 38', gasket 57 may be lacking and the seal, for instance of the metal-to-metal type, is obtained through a reduced clearance coupling.

Further, the primary piston could comprise a pair of telescopic members, which are both slidable relative to the secondary piston and are mechanically connected so that the external member makes the internal member slide after a certain stroke. In this manner, two high-pressure annular chambers are created, the one around the secondary piston and the other around the internal member of the primary piston.

Moreover, locking of secondary piston 13, instead of being obtained hydraulically, as described, could be obtained mechanically, e.g. by fastening piston 13 from the outside by means of a screw and by adding a sealing gasket, or even by adding a resilient holding ring. Yet, the hydraulic solution described has the advantage of being self-centring.

Still further, in the balancing system shown in Figs. 4 and 5, the effect achieved by deforming the wall of bore 11 can also be achieved by means of a slide mounted in hydraulically tight manner in hole 72 and pushed by threaded dowel 73 towards bore 11 and piston 12.

Lastly, the shutter for the stroke-driven balancing valve may consist of an element associated with the piston or the primary piston, instead of consisting of the end portion of the piston itself.

## Claims

1. A differential master cylinder, including:
- an inlet (21) for a fluid to be pressurised and an outlet (22) for delivering pressurised fluid to a user device operating according to at least an initial operating phase and a final operating phase;
- compression members (12, 13) having at least a first and a second compressing surface, said first compressing surface having a greater area than the second compressing surface, said compression members being arranged to define at least one chamber (15) connected to the user device and to bring the fluid to a low pressure in the initial phase by means of the first surface and to a high pressure in the second phase by means of the second surface; and
- at least one control valve (38) arranged to cause a gradual transition between the two phases;
the compression members (12, 13) comprising a hollow primary piston (12) and a hollow secondary piston (13), which are open at one end and are mutually associated in telescopic manner so that the primary piston (12) slides on the secondary piston (13), which is stationary, the sliding of the primary piston (12) determining the transition from the compression by means of the first surface to the compression by means of the second surface by actuating the control valve (38);
**characterised in that** said pistons define, with the internal surface of a cylinder bore (11) housing the pistons, at least one external chamber (16) forming the at least one chamber connected to the user device.

2. The differential master cylinder as claimed in claim 1, **characterised in that** the primary piston (12) and the secondary piston (13) are associated so that their cavities form a single internal chamber (15) arranged to cooperate with the external chamber (16) during the initial phase and subsequently isolated from the external chamber.

3. The differential master cylinder as claimed in claim 1 or 2, **characterised in that** the secondary piston (13) is associated with locking means (62, 63) arranged to prevent axial displacements thereof in opposite direction to the sliding direction of the primary piston (12) due to thrusts exerted by fluid possibly leaked between the end of the piston (13) and the end (18) of the bore (11).

4. The differential master cylinder as claimed in any preceding claim, **characterised in that** the control valve (38) is located externally of the pistons (12, 13) and is housed in a seat (37) parallel to said bore (11), said seat crossing the outlet from the external chamber (16) and being arranged to allow the access to the valve from the outside.

5. The differential master cylinder as claimed in any preceding claim, **characterised in that** the primary piston (12) is associated with a balancing valve (91), which is normally closed and is operated, for opening, by the sliding of the primary piston (12) in order to establish a connection between the external chambers (16) of a first and a second master cylinder (400) when a first and a second user device, driven by the first and the second master cylinder (400), respectively, operate in coordinate manner, and **in that** said balancing valve (91) has a shutter consisting of or integral with the open end portion (12') of the primary piston (12) and having an external surface equipped with two toroidal gaskets (92, 93) that are axially spaced apart from each other and are located, in rest condition, at both sides of the end (90A) of a duct connecting both master cylinders (400).

6. The differential master cylinder as claimed in any of claims 1 to 4, **characterised in that**:
- the primary piston (12) is associated with a balancing valve, which is normally closed and is operated, for opening, by the sliding of the primary piston (12) in order to establish a connection between the external chambers (16) of a first and a second master cylinder (100) when a first and a second user device, driven by the first and the second master cylinders (100), respectively, operate in coordinate manner;
- the balancing valve has a shutter consisting of or integral with the open end portion (12') of the primary piston (12) and having an external surface arranged, in rest conditions, to engage in fluid-tight manner a region of the internal surface of the cylinder bore (11) diametrically opposite a local deformation of said surface provided in correspondence of the fluid inlet (21); and
- a threaded radial bore (72) is formed in the fluid inlet (21), which threaded bore is blind towards the cylinder bore (11), is diametrically opposite an end (71) of a duct connecting both cylinders and is engaged by a screw member (73) arranged to exert on the bottom of the threaded bore (72) a pressure such as to create the local deformation.

7. The differential master cylinder as claimed in any of claims 1 to 4, **characterised in that** the external chamber (16) is associated with a balancing valve (81), which is normally closed and is operated so as to open in order to establish a connection between the external chambers (16) of a first and a second master cylinder (300) when a first and a second user device, driven by the first and the second master cylinder (300), respectively, operate in coordinate manner, and **in that** said balancing valve (81) is housed in a seat (82) located externally of the pistons (12, 13) and having an axis parallel to the axes of the pistons and of the seat (37) of the control valve (38), and has a shutter (83) mechanically unconstrained to the primary piston (12) and operated, for opening, in a manner fluidically controlled by the pressure taken by the fluid contained in the external chamber (16), the shutter (83) being slidable parallel to and in opposite direction to the primary piston (12).

8. The differential master cylinder as claimed in any preceding claim, **characterised in that** the user device is a brake or a group of brakes of a motor vehicle.

## Patentansprüche

1. Haupt-Differentialzylinder, aufweisend:
- einen Einlass (21) für ein mit Druck zu beaufschlagendes Fluid und einen Auslass (22), um mit Druck beaufschlagtes Fluid einer Anwendervorrichtung zuzuführen, welche gemäß mindestens einer von einer Ausgangsbetriebsphase und einer Endbetriebsphase arbeitet;
- Druckglieder (12, 13), welche mindestens eine erste und eine zweite Druckfläche aufweisen, wobei die erste Druckfläche einen größeren Flächeninhalt als die zweite Druckfläche aufweist, wobei die Druckglieder dafür eingerichtet sind, um mindestens eine Kammer (15) zu definieren, welche mit der Anwendervorrichtung verbunden ist, und das Fluid in der Ausgangsphase auf einen niedrigen Druck mittels der ersten Fläche und in der zweiten Phase auf einen hohen Druck mittels der zweiten Fläche zu bringen; und
- mindestens ein Steuerventil (38), welches dafür eingerichtet ist, um einen allmählichen Übergang zwischen den beiden Phasen zu bewirken;
wobei die Druckglieder (12, 13) einen hohlen, primären Kolben (12) und einen hohlen, sekundären Kolben (13) aufweisen, welche an einem Ende offen sind und gegenseitig in teleskopischer Weise verknüpft sind, so dass der primäre Kolben (12) auf dem sekundären Kolben (13), welcher stationär ist, gleitet, wobei das Gleiten des primären Kolbens (12) den Übergang von der Kompression mittels der ersten Fläche zur Kompression mittels der zweiten Fläche durch Betätigung des Steuerventils (38) bestimmt;
**dadurch gekennzeichnet, dass** die Kolben mit der inneren Fläche einer Zylinderbohrung (11), welche die Kolben aufnimmt, mindestens eine äußere Kammer (16) definieren, welche die mindestens eine Kammer, welche mit der Anwendervorrichtung verbunden ist, bildet.

2. Haupt-Differentialzylinder nach Anspruch 1, **dadurch gekennzeichnet, dass** der primäre Kolben (12) und der sekundäre Kolben (13) verknüpft sind, so dass ihre Hohlräume eine einzige innere Kammer (15) bilden, welche dafür eingerichtet ist, um mit der äußeren Kammer (16) während der Ausgangsphase zusammenzuwirken und anschließend von der äußeren Kammer isoliert zu sein.

3. Haupt-Differentialzylinder nach Anspruch 1 oder 2, **dadurch gekennzeichnet, dass** der sekundäre Kolben (13) mit Blockiermitteln (62, 63) verknüpft ist, welche dafür eingerichtet sind, um axiale Verschiebungen von ihm in zu der Gleitrichtung des primären Kolbens (12) entgegen gesetzter Richtung auf Grund von Druckkräften, welche durch möglicherweise zwischen dem Ende des Kolbens (13) und dem Ende (18) der Bohrung (11) entwichenes Fluid ausgeübt werden, zu verhindern.

4. Haupt-Differentialzylinder nach einem der vorhergehenden Ansprüche, **dadurch gekennzeichnet, dass** das Steuerventil (38) außerhalb der Kolben (12, 13) angeordnet ist und in einem Sitz (37) parallel zu der Bohrung (11) aufgenommen ist, wobei der Sitz den Auslass aus der äußeren Kammer (16) kreuzt und dafür eingerichtet ist, um den Zugang zu dem Ventil von außerhalb zu ermöglichen.

5. Haupt-Differentialzylinder nach einem der vorhergehenden Ansprüche, **dadurch gekennzeichnet, dass** der primäre Kolben (12) mit einem Entlastungsventil (91) verknüpft ist, welches normalerweise geschlossen ist und durch das Gleiten des primären Kolbens (12) betätigt wird, um zu öffnen, um eine Verbindung zwischen den äußeren Kammern (16) eines ersten und eines zweiten Hauptzylinders (400) herzustellen, wenn eine erste und eine zweite Anwendervorrichtung, welche jeweils von dem ersten und dem zweiten Hauptzylinder (400) angetrieben wird, in koordinierter Weise arbeiten, und dass das Entlastungsventil (91) einen Verschluss aufweist, welcher aus dem offenen Endabschnitt (12') des primären Kolbens (12) gebildet wird oder mit ihm integral ist und eine äußere Fläche aufweist, welche mit zwei ringförmigen Dichtungen (92, 93) ausgerüstet sind, welche zueinander axial beabstandet sind und in Ruheposition an beiden Seiten des Endes (90A) eines Kanals angeordnet sind, welcher beide Hauptzylinder (400) verbindet.

6. Haupt-Differentialzylinder nach einem der Ansprüche 1 bis 4, **dadurch gekennzeichnet, dass** :
- der primäre Kolben (12) mit einem Entlastungsventil verknüpft ist, welches normalerweise geschlossen ist und durch das Gleiten des primären Kolbens (12) betätigt wird, um zu öffnen, um eine Verbindung zwischen den äußeren Kammern (16) eines ersten und eines zweiten Hauptzylinders (100) herzustellen, wenn eine erste und eine zweite Anwendervorrichtung, welche jeweils von dem ersten und dem zweiten Hauptzylinder (100) angetrieben wird, in koordinierter Weise arbeiten;
- wobei das Entlastungsventil einen Verschluss aufweist, welcher aus dem offenen Endabschnitt (12') des primären Kolbens (12) gebildet wird oder mit ihm integral ist und eine äußere Fläche aufweist, welche dafür eingerichtet ist, um unter Ruhebedingungen in fluiddichter Weise mit einem Bereich der inneren Fläche der Zylinderbohrung (11), welcher diametral einer lokalen Verformung der Fläche, welche in Übereinstimmung mit dem Fluideinlass (21) vorgesehen ist, gegenüber liegt, in Eingriff zu sein; und
- eine radiale Gewindebohrung (72) in dem Fluideinlass (21) ausgebildet ist, welche Gewindebohrung in Richtung auf die Zylinderbohrung (11) geschlossen ist, einem Ende (71) eines Kanals, welcher beide Zylinder verbindet, diametral gegenüber liegt und mit einem Schraubenelement (73) in Eingriff gelangt, welches dafür eingerichtet ist, am Boden der Gewindebohrung (72) einen Druck auszuüben, um so die lokale Verformung zu bilden.

7. Haupt-Differentialzylinder nach einem der Ansprüche 1 bis 4, **dadurch gekennzeichnet, dass** die externe Kammer (16) mit einem Entlastungsventil (81) verknüpft ist, welches normalerweise geschlossen ist und betätigt wird, um zu öffnen, um eine Verbindung zwischen den äußeren Kammern (16) eines ersten und eines zweiten Hauptzylinders (300) herzustellen, wenn eine erste und eine zweite Anwendervorrichtung, welche jeweils von dem ersten und dem zweiten Hauptzylinder (300) angetrieben wird, in koordinierter Weise arbeiten, und dass das Entlastungsventil (81) in einem Sitz (82) aufgenommen ist, welcher außerhalb der Kolben (12, 13) angeordnet ist und eine Achse aufweist, welche parallel zu den Achsen der Kolben und des Sitzes (37) des Steuerventils (38) verläuft, und einen Verschluss (83) aufweist, welcher mechanisch zu dem primären Kolben (12) ungehindert ist und zum Öffnen durch den Druck von dem in der externen Kammer (16) enthaltenen Fluid fluidisch gesteuert wird, wobei der Verschluss (83) parallel und in zu dem primären Kolben (12) entgegen gesetzter Richtung verschiebbar ist.

8. Haupt-Differentialzylinder nach einem der vorhergehenden Ansprüche, **dadurch gekennzeichnet, dass** die Anwendervorrichtung eine Bremse oder eine Gruppe von Bremsen eines Kraftfahrzeugs ist.

## Revendications

1. Maître-cylindre différentiel, comprenant:
- une entrée (21) pour un fluide à pressuriser et une sortie (22) pour délivrer un fluide sous pression à un dispositif d'utilisateur qui fonctionne suivant au moins une phase de fonctionnement initiale et une phase de fonctionnement finale;
- des éléments de compression (12, 13) présentant au moins une première et une seconde surfaces de compression, ladite première surface de compression présentant une aire plus grande que celle de la seconde surface de compression, lesdits éléments de compression étant agencés de manière à définir au moins une chambre (15) connectée au dispositif d'utilisateur et à amener le fluide à une basse pression dans la phase initiale au moyen de la première surface et à une haute pression dans la seconde phase au moyen de la seconde surface; et
- au moins une soupape de commande (38) agencée de manière à entraîner une transition graduelle entre les deux phases,
les éléments de compression (12, 13) comprennent un piston primaire creux (12) et un piston secondaire creux (13), qui sont ouverts à une extrémité et qui sont mutuellement associés d'une manière télescopique de telle sorte que le piston primaire (12) coulisse sur le piston secondaire (13), qui est stationnaire, le coulissement du piston primaire (12) déterminant la transition à partir de la compression au moyen de la première surface à la compression au moyen de la seconde surface en actionnant la soupape de commande (38),
**caractérisé en ce que** lesdits pistons définissent, avec la surface interne d'un alésage de cylindre (11) contenant les pistons, au moins une chambre externe (16) qui forme ladite au moins une chambre connectée au dispositif d'utilisateur.

2. Maître-cylindre différentiel selon la revendication 1, **caractérisé en ce que** le piston primaire (12) et le piston secondaire (13) sont associés de telle sorte que leurs cavités forment une seule chambre interne (15) agencée de manière à coopérer avec la chambre externe (16) pendant la phase initiale et à être ensuite isolée de la chambre externe.

3. Maître-cylindre différentiel selon la revendication 1 ou 2, **caractérisé en ce que** le piston secondaire (13) est associé à des moyens de verrouillage (62, 63) agencés de manière à empêcher les déplacements axiaux de celui-ci dans une direction opposée à la direction de coulissement du piston primaire (12) en raison de poussées exercées par du fluide fuyant potentiellement entre l'extrémité du piston (13) et l'extrémité (18) de l'alésage (11).

4. Maître-cylindre différentiel selon l'une quelconque des revendications précédentes, **caractérisé en ce que** la soupape de commande (38) est située à l'extérieur des pistons (12, 13) et est logée dans un siège (37) parallèle audit alésage (11), ledit siège croisant la sortie à partir de la chambre externe (16) et étant agencé de manière à offrir un accès à la soupape depuis l'extérieur.

5. Maître-cylindre différentiel selon l'une quelconque des revendications précédentes, **caractérisé en ce que** le piston primaire (12) est associé à une soupape d'équilibrage (91), qui est normalement fermée et qui est actionnée, pour son ouverture, par le coulissement du piston primaire (12) dans le but d'établir une connexion entre les chambres externes (16) d'un premier et d'un second maîtres-cylindres (400) lorsqu'un premier et un second dispositifs d'utilisateur, entraînés par le premier et le second maîtres-cylindres (400), respectivement, opèrent de manière coordonnée, et **en ce que** ladite soupape d'équilibrage (91) comprend un obturateur qui consiste en ou est intégré à la partie d'extrémité ouverte (12') du piston primaire (12) et qui présente une surface externe pourvue de deux garnitures toroïdales (92, 93) qui sont axialement espacées l'une de l'autre et qui sont situées, dans des conditions de repos, des deux côtés de l'extrémité (90A) d'un conduit qui connecte les deux maîtres-cylindres (400).

6. Maître-cylindre différentiel selon l'une quelconque des revendications 1 à 4, **caractérisé en ce que**:
- le piston primaire (12) est associé à une soupape d'équilibrage, qui est normalement fermée et qui est actionnée, pour son ouverture, par le coulissement du piston primaire (12) dans le but d'établir une connexion entre les chambres externes (16) d'un premier et d'un second maîtres-cylindres (100) lorsqu'un premier et un second dispositifs d'utilisateur, entraînés par le premier et le second maîtres-cylindres (100), respectivement, opèrent de manière coordonnée;
- la soupape d'équilibrage comprend un obturateur qui consiste en ou est intégré à la partie d'extrémité ouverte (12') du piston primaire (12) et qui présente une surface externe agencée, dans des conditions de repos, de manière à engager d'une manière étanche au fluide une région de la surface interne de l'alésage de cylindre (11) qui est diamétralement opposée à une déformation locale de ladite surface prévue en correspondance avec l'entrée de fluide (21); et
- un alésage radial fileté (72) est formé dans l'entrée de fluide (21), ledit alésage fileté étant aveugle en direction de l'alésage de cylindre (11), étant diamétralement opposé à une extrémité (71) d'une conduit qui connecte les deux cylindres et étant engagé par un élément de vis (73) agencé de manière à exercer au fond de l'alésage fileté (72) une pression telle qu'elle permette de créer une déformation locale.

7. Maître-cylindre différentiel selon l'une quelconque des revendications 1 à 4, **caractérisé en ce que** la chambre externe (16) est associé à une soupape d'équilibrage (81), qui est normalement fermée et qui est actionnée de manière à s'ouvrir dans le but d'établir une connexion entre les chambres externes (16) d'un premier et d'un second maîtres-cylindres (300) lorsqu'un premier et un second dispositifs d'utilisateur, entraînés par le premier et le second maîtres-cylindres (300), respectivement, opèrent de manière coordonnée, et **en ce que** ladite soupape d'équilibrage (81) est logée dans un siège (82) situé à l'extérieur des pistons (12, 13) et qui présente un axe parallèle aux axes des pistons et du siège (37) de la soupape de commande (38), et comprend un obturateur (83) non contraint mécaniquement au niveau du piston primaire (12) et actionné, pour son ouverture, d'une manière fluidiquement contrôlée par la pression subie par le fluide contenu dans la chambre externe (16), l'obturateur (83) pouvant coulisser parallèlement à et dans la direction opposée au piston primaire (12).

8. Maître-cylindre différentiel selon l'une quelconque des revendications précédentes, **caractérisé en ce que** le dispositif d'utilisateur est un frein ou un groupe de freins d'un véhicule à moteur.
